# EUROPÄISCHE PATENTSCHRIFT

(11) **EP 0 477 521 B1**
(45) Veröffentlichungstag und Bekanntmachung des Hinweises auf die Patenterteilung: **07.12.1994**
(21) Anmeldenummer: 91113549.9
(22) Anmeldetag: 13.08.1991
(51) Int. Cl.: D03D 1/02, B60R 21/16

(54) **Verfahren zur Herstellung eines Airbag-Gewebes**
Process for manufacturing fabric for airbags
Procédé pour fabriquer du tissu pour un coussin pneumatique

(30) Priorität: 08.09.1990 DE 4028636
(43) Veröffentlichungstag der Anmeldung: 01.04.1992
(73) Patentinhaber: Akzo Nobel N.V., 6824 BM Arnhem (NL)
(72) Erfinder: Krummheuer, Wolf Rüdiger, Dr., W-5600 Wuppertal 1 (DE); Siejak, Volker, W-4100 Duisburg (DE); Graefe, Hans Albert, W-5830 Schwelm (DE)
(74) Vertreter: Fett, Günter

(56) Entgegenhaltungen:
- EP-A- 0 363 490
- WO-A-90/09295
- DE-A- 3 644 554
- US-A- 3 481 625

## Beschreibung

Die Erfindung betrifft ein Verfahren zur Herstellung eines Gewebes für den Filterteil eines mehrteiligen Airbags.

Bei Airbag-Geweben wird üblicherweise für die dem Kraftfahrzeuginsassen zugewandte Seite eine geringe Luftdurchlässigkeit gefordert, die Werte von 10 l/dm²·min bei 500 Pa Prüfdifferenzdruck nicht übersteigen soll. Wird ein Airbag nur aus solchem Gewebe hergestellt, so wird beim Aufblasen des Airbags durch Zünden des pyrotechnischen Gasgenerators ein sehr hartes Luftkissen erzeugt. Bei diesem besteht die Gefahr, daß der beim Aufprall mit großer Wucht zunächst nach vorn geschleuderte Körper des Fahrers oder Beifahrers ruckartig zurückgeschleudert wird, wodurch Verletzungen, besonders im Kopf- und Nackenbereich, auftreten können.

Deshalb besteht die Forderung, den Airbag so zu gestalten, daß ein weiches Auffangen der Fahrzeuginsassen beim Aufprall ohne Gefahr der Rückfederung möglich ist. Dies läßt sich dadurch erreichen, daß dem beim Auslösen der Airbagfunktion in den Airbag einströmendem Gas die Möglichkeit geboten wird, teilweise zu entweichen.

In der US-A 34 81 625 wird hierzu vorgeschlagen, den Airbag mit Löchern zu versehen. Hierbei gelangen jedoch heiße Partikel aus dem vom Generator erzeugten Gas in den Fahrerraum. Diese bilden eine erhebliche Gefahr für die Fahrzeuginsassen.

Um das Austreten dieser Partikel zu vermeiden, wurde in der DE-C 36 44 554 vorgeschlagen, die für das Entweichen des Gases vorgesehenen Öffnungen mit einem Filtergewebe aus Aramidfasern zu überdecken. Dieses Verfahren erfordert einen erheblichen Konfektionieraufwand für das Einnähen des Filtergewebes. Durch diesen zusätzlichen Arbeitsgang sowie durch den hohen Preis von Aramidgeweben werden die Kosten für die Herstellung eines Airbags so erhöht, daß eine kostengünstige Produktion nicht möglich ist.

In einem Vortrag (Krummheuer, W.R., Engineering with Fibres for Airbags, Beg and Belt '90, International Akzo Symposium, Köln, 25.-27.04.1990) wurde deshalb vorgeschlagen, einen zweiteiligen Airbag herzustellen. Dieser besteht aus einem Kontaktteil und einem Filterteil. Für den Kontaktteil wird ein Gewebe mit sehr geringer Luftdurchlässigkeit (< 10 l/dm²·min) eingesetzt. Es handelt sich hierbei um den Teil des Airbags, der zum Auffangen des Fahrzeuginsassen beim Unfall dient.

Der Filterteil bildet die dem Fahrer oder Beifahrer nicht zugewandten Teile des aufgeblasenen Airbags. Er besteht aus einem Gewebe mit deutlich höherer Luftdurchlässigkeit, das somit die Möglichkeit zum Entweichen für das vom Generator erzeugte Gas bietet und das austretende Gas filtert. Darüberhinaus tritt an dieser Stelle beim Durchtritt des heißen Gases durch das Gewebe auch ein Wärmeaustauscheffekt ein, so daß das Gas etwas abgekühlt in den Fahrgastraum gelangt.

In der EP-A 363 490 wurde vorgeschlagen, einen einteiligen Airbag als Rundgewebe zu weben. In dieser Art hergestellte Airbag-Gewebe bieten jedoch, im Gegensatz zu zwei- oder mehrteiligen Airbags, nicht die Möglichkeit der Anpassung an den jeweiligen Fahrzeugtyp. So ist es bei den heutigen Anforderungen an die Konstruktion des Beifahrer-Airbags gar nicht möglich, diesen aus einem Stück herzustellen, sondern das Vernähen von zwei oder mehr Teilen ist hier unumgänglich. Außerdem ist das notwendige Einnähen von Haltebändern bei einem einteiligen Airbag wesentlich schwieriger durchzuführen als bei einem zwei- oder mehrteiligen.

Ebenfalls ein einteiliger Airbag mit Gewebeteilen mit unterschiedlicher Luftdurchlässigkeit wird in WO-A 90-09 295 beschrieben. Auch mit dem dort erläuterten Verfahren ist es nicht möglich, Airbags für Beifahrer herzustellen.

Die zwei- oder mehrteilig hergestellten Airbags lassen sich zwar sehr gut an die Anforderungen der jeweiligen Fahrzeugtypen anpassen und bieten auch die Möglichkeit der problemlosen Konfektion von Beifahrer-Airbags, hier ergibt sich aber das Problem, daß zwei Gewebe mit sehr unterschiedlicher Luftdurchlässigkeit miteinander vernäht werden müssen. Dieses Problem besteht bei den in EP-A- 363 490 und WO-A- 90-09295 beschriebenen einteilig gewebten Airbags nicht. Da die hohe Luftdurchlässigkeit des für den Filterteil des Airbags verwendeten Gewebes durch ein weniger dichtes Gewebe erreicht wird, während der Kontaktteil des Airbags aus einem dichten Gewebe hergestellt wird, müssen hierbei also zwei unterschiedlich dichte Gewebe miteinander vernäht werden. Beim Aufblasen des Airbags kann das weniger dichte Gewebe an den Nahtstellen ausreißen oder es können Verschiebungen der Fäden des weniger dichten Gewebes auftreten, wodurch es zu einem unkontrollierten Gasaustritt kommen kann.

Darüberhinaus verursacht diese Arbeitsweise auch Dispositionsprobleme in der Weberei, da die Luftdurchlässigkeit des Filterteils auf die Fahrzeugart und auf den eingesetzten Generator abgestimmt werden muß. Es ist somit nötig, in der Weberei eine große Zahl unterschiedlich dichter Gewebe herzustellen bzw. bereitzuhalten.

Deshalb bestand die Aufgabe, ein Herstellungsverfahren für ein Gewebe zu entwickeln, das beim Einsatz im Filterteil des Airbags die oben geschilderten Nachteile nicht aufweist und das sehr flexibel und in kostengünstiger Weise an die für die einzelnen Fahrzeugtypen gestellten Forderungen angepaßt werden kann, das aber weiterhin die Möglichkeit des gezielten Entweichens des vom Generator erzeugten Gases bietet und das auf das Gas eine Filter- und Abkühlwirkung ausübt.

Die Lösung dieser Aufgabe besteht in der Herstellung eines Gewebes, in dem durch webereitechnische Maßnahmen in Form und Größe variierbare Zonen geringerer und höherer Luftdurchlässigkeit erzeugt werden. Die oben geschilderten Nachteile können mit der erfindungsgemäßen Schaffung von Zonen unterschiedlicher Luftdurchlässigkeit in besonders vorteilhafter Weise umgangen werden. Durch die Verwendung eines erfindungsgemäß hergestellten Filterteiles können die Forderungen an einen Airbag voll erfüllt werden.

Die dichteren Gewebezonen zeigen eine geringe Luftdurchlässigkeit. Sie bilden wegen der hier erzielten hohen Schnitt- und Nahtfestigkeit die für den Zuschnitt vorgesehenen Bereiche. Die in der Art von Fenstern in dem Gewebe angeordneten weniger dichten Zonen, die eine höherere Luftdurchlässigkeit aufweisen, ermöglichen beim Aufblasen des Airbags ein kontrolliertes Austreten sowie ein Abkühlen des vom Generator erzeugten Gases. Diese Stellen sind für die Schnitt- und Nahtkanten kaum geeignet.

Die Zonen mit geringerer Luftdurchlässigkeit werden in dem für den Filterteil des Airbags hergestellten Gewebe so angeordnet, daß sie beim Zuschnitt der Gewebe für die spätere Konfektionierung des Airbags zwangsläufig die Nahtstellen bilden. Durch die hier dichteren Stellen wird nach dem Vernähen des Filterteils des Airbags mit dem Kontaktteil eine sehr feste Naht erhalten, an der beim Aufblasen des Airbags keine Risse und keine Fadenverschiebungen entstehen. Außerdem werden durch die dichten Stellen an den Kanten des Zuschnittstückes beim Zuschneiden Vorteile erzielt, da hier eine schnittfestere Kante ohne Ausfransungen entsteht.

Die höhere bzw. geringere Luftdurchlässigkeit läßt sich durch Veränderungen der Gewebebindungen oder durch Variation der Fadenzahlen in Kette und Schuß einstellen. So kann beispielsweise beim erstgenannten Verfahren ein Gewebe in einer dichten Leinwandgrundbindung hergestellt werden. Die Fadenzahlen und die Ausrüstungsbedingungen des Gewebes werden so gewählt, daß an den Stellen, an denen die Grundbindung unverändert erhalten bleibt, eine geringe Luftdurchlässigkeit und damit einhergehend, an den hier dichten Gewebestellen eine gute Schnitt- und Nahtfestigkeit erzielt wird. An den Stellen, die nicht die Naht- oder Schnittkanten bilden sollen und durch die der Austritt des vom Generator erzeugten Gases erfolgen soll, wird die Bindung des Gewebes so geändert, daß hier Zonen höherer Luftdurchlässigkeit entstehen.

Welche Bindungsart hierzu gewählt wird, hängt von dem jeweils zur Verfügung stehenden Maschinenpark sowie von den Anforderungen an die Luftdurchlässigkeit ab. Die Erfindung ist zur Einstellung von Zonen mit höherer Luftdurchlässigkeit mit von der Grundbindung abweichender Gewebebindung nicht auf eine bestimmte Gewebebindungsart eingeschränkt. Hierfür sind alle in der Webereitechnik bekannten Bindungsarten geeignet. Als Beispiele für eine abweichende Gewebebindung in den Zonen höherer Luftdurchlässigkeit seien bei einer Leinwandgrundbindung die Köper- und die Panamabindung genannt.

Eine Möglichkeit zur Erzielung von Zonen mit abweichender Gewebebindung und damit höherer Luftdurchlässigkeit bieten die in der Webereitechnik allgemein bekannten Excenter- und Schaftmaschinen. Die Schaftmaschine kann als Zusatzvorrichtung bei jeder beliebigen Webmaschine Verwendung finden. Sie ermöglicht es, die Schäfte der Webmaschine so zu steuern, daß Bindungen verschiedener Art innerhalb eines Gewebes eingestellt werden können. In gleicher Weise kann die Exzentermaschine eingesetzt werden.

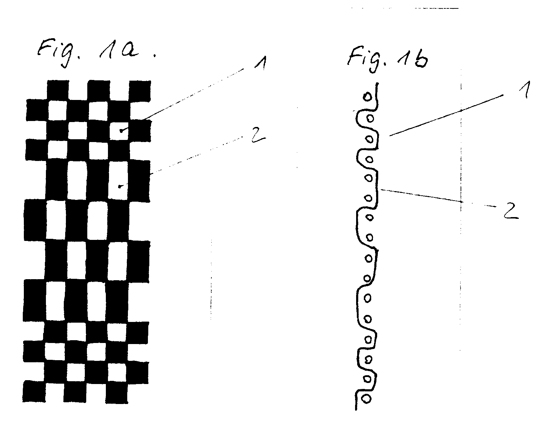

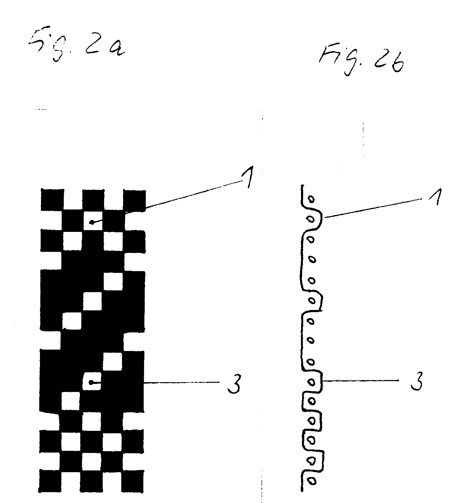

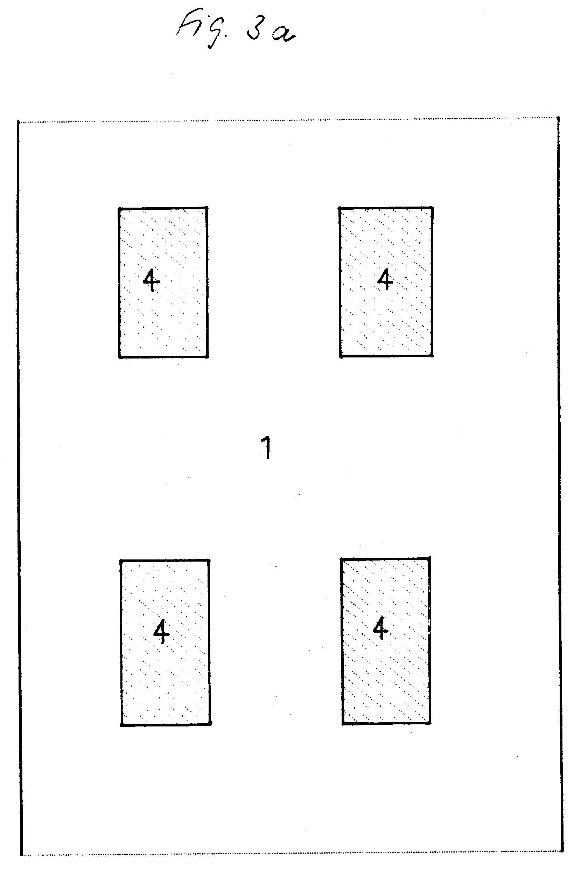

In Fig. 1 und Fig. 2 ist dargestellt, in welcher Weise die Gewebebindungen mit Hilfe einer Schaftmaschine variiert werden, um damit Zonen mit höherer Luftdurchlässigkeit zu erhalten.

Fig. 1a zeigt das Bindungsschema eines Gewebes in dichter Leinwandgrundbindung (1). In diese wurde mit Hilfe einer Schaftmaschine ein Fenster in Panamabindung (2) eingewebt. Fig. 1b zeigt das entsprechende Gewebe als Schnittzeichnung. An der fensterartig eingewebten Zone mit Panamabindung wird eine höhere Luftdurchlässigkeit erhalten.

Fig. 2a zeigt das Bindungsschema eines Gewebes in dichter Leinwandgrundbindung (1). In diese wurde mit Hilfe einer Schaftmaschine ein Fenster in Köper 3/1- Bindung (3) eingewebt. Fig. 2b zeigt das entsprechende Gewebe als Schnittzeichnung. An der fensterartig eingewebten Zone mit Köperbindung wird eine höhere Luftdurchlässigkeit erhalten.

Die Stellen in dichter Grundbindung werden bei der Gewebekonstruktion so vorgegeben, daß sie beim späteren Zuschneiden der Gewebe für den Filterteil des Airbags zwangsläufig die Schnitt- und Nahtkanten ergeben. Der Umriß des Zuschnittes bildet den Rand der Zone mit geringer Luftdurchlässigkeit oder liegt in dieser Zone. Die mit einer von der Gewebegrundbindung abweichenden Bindung eingewebten Stellen mit höherer Luftdurchlässigkeit ermöglichen einen kontrollierten Austritt des beim Aufblasen des Airbags vom Generator erzeugten Gases bei guter Filter- und Abkühlwirkung.

Wie stark die Luftdurchlässigkeit durch ein Wechseln der Gewebebindung beeinflußt werden kann, zeigt die nachstehende Tabelle. In ein Gewebe mit einer Leinwandgrundbindung mit 20 Fäden/cm (Polyamid 6.6-Filamentgarn mit dem Titer 470 f 72) in Kette und Schuß, wurden Fenster in verschiedenen Bindungen mit Hilfe einer Schaftmaschine eingewebt. Bei den einzelnen Bindungen wurden folgende Luftdurchlässigkeiten erhalten:

| Gewebebindung | Luftdurchlässigkeit l/dm²·min |
|---|---|
| Leinwandgrundbindung | 9 |
| Querrips 2/2 | 40 |
| Panama 2/2 | 54 |
| Gerstenkorn | 64 |
| Phantasiebindung | 79 |
| Köper 3/1 | 87 |
| Köper 2/2 | 135 |
| Scheindreher | 150 |

Diese Tabelle zeigt, daß die Luftdurchlässigkeit nicht nur durch die Größe der Zonen mit abweichender Bindung, sondern auch durch die Wahl der Bindungsart sehr gezielt gesteuert werden kann.

Daß es notwendig ist, die Nahtstellen in die Zonen geringer Luftdurchlässigkeit, also im hier beschriebenen Fall in die Zonen der dichten Leinwandgrundbindung zu legen, zeigt eine Untersuchung der Nahtfestigkeit und der Nahtschiebefestigkeit:

| Nahtfestigkeit | Leinwandgrundbindung | Panamabindung 2/2 |
|---|---|---|
| Festigkeit N | 1 210 | 840 |
| Dehnung % | 18,9 | 29,1 |

| Nahtverschiebung in mm bei Belastung | | |
|---|---|---|
| 5 daN | 0 | 4,5 |
| 10 daN | 0 | nicht meßbar |

Bei der Panamabindung war im Meßbereich 10 daN die Naht bereits so ausgerissen, daß eine Messung nicht mehr durchführbar war.

Für die Einstellung von Zonen mit abweichender Gewebebindung und damit höherer Luftdurchlässigkeit kann auch eine Jacquard-Webmaschine, wie sie in der Webereitechnik allgemein bekannt ist, Einsatz finden. Die Jacquard-Webmaschine bietet gegenüber der Verwendung der Schaftmaschine oder Excentermaschine den Vorteil, daß die Litzen einzeln gesteuert werden können, während bei Einsatz der Schaftmaschine die Litzen nur in Gruppen steuerbar sind. Durch Verwendung der Jacquard-Maschine können somit die Bindungen so variiert werden, daß sie in optimaler Weise den für den Airbag erforderlichen Zuschnitten angepaßt werden können. Bei der Festlegung der Gewebekonstruktion werden die Stellen mit dichter Grundbindung so gewählt, daß sie beim Zuschneiden des Filterteils des Airbags zwangsläufig die Schnittkanten und beim späteren Vernähen somit die Nahtkanten bilden. Durch diese Arbeitsweise ergibt sich beim Zuschneiden eine sehr geringe Verschnittmenge, was sich besonders günstig auf die Produktionskosten auswirkt.

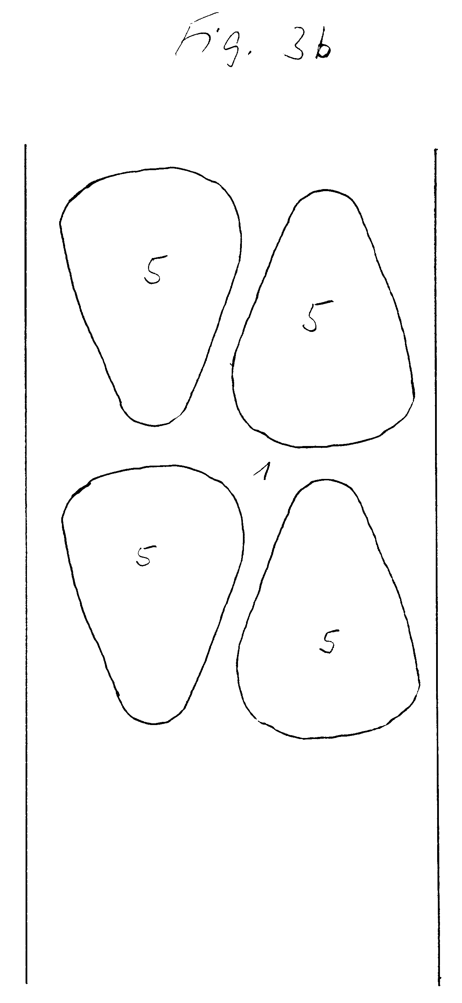

Fig. 3a zeigt einen Gewebeabschnitt mit Zonen höherer Luftdurchlässigkeit (4), die durch Veränderung einer dichten Leinwandgrundbindung (1) mit Hilfe der Exzentermaschine oder der Schaftmaschine fensterartig in abweichender Bindung erzeugt wurden. Die Stellen in Leinwandbindung bilden die Schnitt- bzw. Nahtkanten beim späteren Zuschneiden bzw. Vernähen. Die in abweichender Bindung gewebten Stellen ermöglichen einen kontrollierten Austritt des vom Generator erzeugten Gases bei sehr guter Filter- und Abkühlwirkung.

Fig. 3b zeigt einen Gewebeabschnitt mit Zonen höherer Luftdurchlässigkeit (5), die durch Veränderung einer dichten Leinwandgrundbindung (1) mit Hilfe der Jacquardmaschine fensterartig in abweichender Bindung erzeugt wurden. Die Stellen in Leinwandbindung bilden die Schnitt- bzw. Nahtkanten beim späteren Zuschneiden bzw. Vernähen. Die in abweichender Bindung gewebten Stellen ermöglichen einen kontrollierten Austritt des vom Generator erzeugten Gases bei sehr guter Filter- und Abkühlwirkung. Wie die Abbildung zeigt, kann bei Einsatz einer Jacquardmaschine die Gestaltung der Zone mit höherer Luftdurchlässigkeit so erfolgen, daß diese optimal den Zuschnittsformen für den Filterteil des Airbags angepaßt wird, so daß beim späteren Zuschneiden nur ein sehr geringer Verschnitt entsteht und somit eine sehr kostengünstige Konfektionierung möglich ist.

Mit der beschriebenen Verfahrensweise können von derselben Kette unterschiedlich einzusetzende Gewebe hergestellt werden, wodurch bei der notwendigen Anpassung der Airbaggewebe an die verschiedenen Fahrzeugtypen und an die unterschiedlichen Forderungen in der Luftdurchlässigkeit eine sehr kostengünstige Gewebeherstellung möglich wird.

Das erfindungsgemäße Verfahren ist nicht auf das Einbringen von einer fensterartigen Zone mit höherer Luftdurchlässigkeit in den Zuschnitt für den Filterteil eines Airbags beschränkt. Hierunter sind in gleicher Weise auch mehrere fensterartige Zonen pro Zuschnitt zu verstehen. Die Zahl dieser Fenster, ihre Anordnung im Zuschnitt und ihre Größe hängt von den jeweiligen Forderungen an die Luftdurchlässigkeit und von der Art des Fahrzeugs ab.

Bei der Gewebeherstellung ist es zweckmäßig, zum Ausgleich der durch die Bindungsvariation entstehenden Spannungen die Fenster, über die Gewebelänge gesehen, nicht hintereinander, sondern versetzt anzuordnen. Eine andere Möglichkeit, diese Spannungen auszugleichen, ist das Arbeiten mit einer zweiten Kette.

Neben den beschriebenen Verfahrensweisen mit einer Schaftmaschine oder einer Jacquardmaschine ist es auch möglich, in einem Gewebe in Form und Größe variierbare Zonen unterschiedlicher Luftdurchlässigkeit und unterschiedlicher Schnitt- bzw. Nahtfestigkeit durch Variation der Kettfaden- und Schußfadenzahlen zu erzeugen. Hierzu werden Webketten verarbeitet, in denen Sektionen mit hoher Kettfadenzahl pro cm im Riet mit Sektionen mit geringerer Kettfadenzahl pro cm abwechseln. Diese Kette wird in Leinwandbindung verwoben. Die Schußfadenzahlen werden so gewählt, daß, mit Hilfe eines elektronisch gesteuerten Schußeintrags, in gleicher Weise wie bei der Kette, Sektionen mit hoher Schußfadenzahl pro cm mit Sektionen mit geringer Schußfadenzahl rapportmäßig abwechseln.

Für die Sektionen mit hoher Kettfadenzahl werden 22-28 Kettfäden/cm gewählt, die Sektionen mit niedriger Kettfadenzahl enthalten 17-21 Kettfäden/cm. In gleicher Weise werden mit entsprechenden Schußfadenzahlen Sektionen mit hoher und geringer Schußfadenzahl eingestellt. Die angegebenen Werte sind Beispiele für Rohgewebeeinstellungen. Sie beziehen sich auf einen Garntiter von 350 dtex. Bei Einsatz anderer Garntiter muß die Fadenzahl an den Titer entsprechend angepaßt werden. Ebenso sind die Fadenzahlen auf das Schrumpfverhalten der eingesetzten Garne abzustimmen.

Durch Variation der Kettfaden- und der Schußfadenzahlen werden drei Gruppen von Luftdurchlässigkeiten im Gewebe gebildet. An Stellen, wo sich Sektionen mit hoher Kettfadenzahl mit Sektionen mit hoher Schußfadenzahl kreuzen, entstehen Gewebezonen mit geringer Luftdurchlässigkeit und guter Schnitt- bzw. Nahtfestigkeit. Die Gewebekonstruktion wird so gewählt, daß an diesen Stellen bevorzugt der spätere Zuschnitt für den Filterteil des Airbags erfolgt, da hier nicht die Gefahr des Reißens der Nähte oder der Verschiebung der Fadenlagen an der Nahtstelle beim Aufblasen des Airbags besteht.

An den Kreuzungsstellen von Sektionen mit geringer Kettfadenzahl mit Sektionen mit geringer Schußfadenzahl entstehen Gewebezonen mit hoher Luftdurchlässigkeit. Diese Stellen sind als spätere Schnitt- oder Nahtstellen nicht geeignet. Sie ermöglichen aber einen kontrollierten Austritt des vom Generator erzeugten Gases beim Aufblasen des Airbags und üben eine sehr gute Filter- und Abkühlwirkung auf dieses Gas aus.

Darüberhinaus entstehen an den Stellen, wo sich Sektionen hoher Kettfadenzahl mit Sektionen geringer Schußfadenzahl bzw. Sektionen geringer Kettfadenzahl mit Sektionen hoher Schußfadenzahl kreuzen, Zonen mit mittlerer Luftdurchlässigkeit.

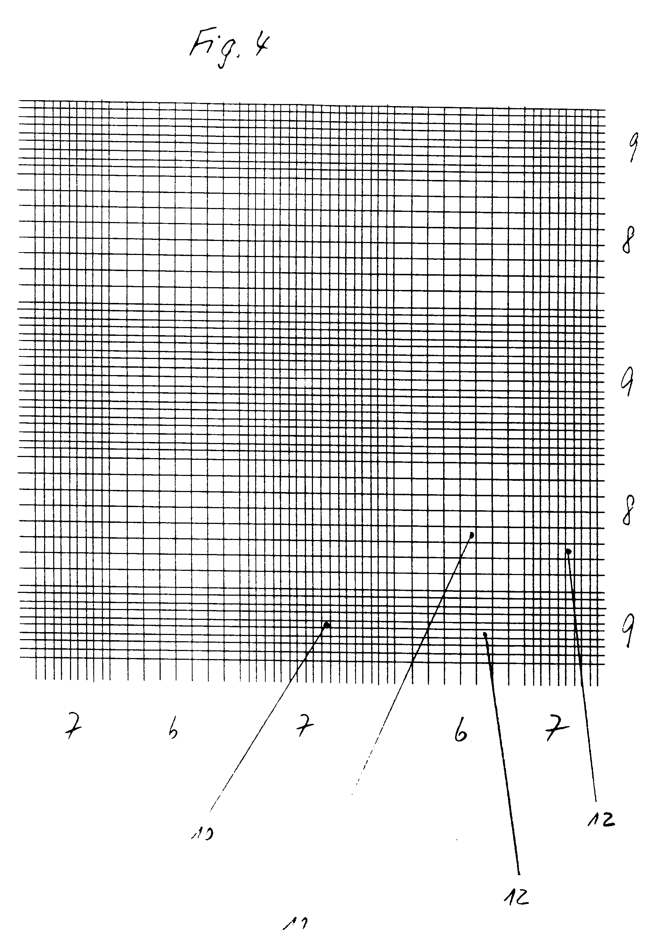

Fig. 4 zeigt ein Gewebe, das durch Variation der Kettfaden- und Schußfadenzahlen hergestellt wurde. Neben einer Sektion mit geringer Fadenzahl (6) liegt in der Kette eine Sektion mit hoher Fadenzahl (7). In gleicher Weise liegt im Schuß neben einer Sektion mit geringer Fadenzahl (8) eine Sektion mit hoher Fadenzahl (9). Auf diese Weise entstehen beim Weben in Leinwandbindung an den Kreuzungstellen der Sektionen mit hoher Kettfadenzahl (7) mit Sektionen mit hoher Schußfadenzahl (9) Zonen mit geringer Luftdurchlässigkeit (10). Diese Zonen werden so gewählt, daß hier beim späteren Zuschneiden des Filterteils des Airbags bevorzugt die Zuschneidestelle bzw. die spätere Naht liegt. Weiter bilden sich Zonen mit hoher Luftdurchlässigkeit (11) an Stellen, wo sich Sektionen mit geringer Kettfadenzahl (6) mit Sektionen mit geringer Schußfadenzahl (8) kreuzen. Diese Stellen bilden die Filterbereiche im Filterteil des Airbags. Sie ermöglichen bei guter Filter- und Abkühlwirkung einen kontrollierten Austritt des vom Generator erzeugten Gases. Schließlich entstehen auch noch Zonen mittlerer Luftdurchlässigkeit an den Kreuzungsstellen (12) von Sektionen mit geringer Kettfadenzahl (6) mit Sektionen mit hoher Schußfadenzahl (9) sowie an den Kreuzungsstellen (12) von Sektionen mit hoher Kettfadenzahl (7) mit Sektionen mit geringer Schußfadenzahl (8).

Mit dieser Arbeitsweise kann auf jedem beliebigen Webstuhl ohne Zuhilfenahme einer Zusatzeinrichtung produziert werden.

In welcher Weise durch die Bildung von Zonen mit geringeren Fadenzahlen die Luftdurchlässigkeit beeinflußt werden kann, zeigt die nachstehend aufgeführte Tabelle. Die hier wiedergegebenen Versuche wurden mit Polyamid 6.6 - Filamentgarn mit einem Titer 470 f 72 durchgeführt:

| Fadenzahl/cm | | Entsprechende Zone in Fig.4 | Luftdurchlässigkeit l/dm²·min |
|---|---|---|---|
| Kette | Schuß | | |
| 20 | 20 | 10 | 9 |
| 15 | 15 | 11 | 107 |
| 20 | 15 | 12 | 62 |
| 15 | 20 | 12 | 66 |

Fig. 5 zeigt eine Schemazeichnung des Prüfstückes für die Prüfung der Nahtfestigkeit. Die Erläuterungen hierzu erfolgen weiter unten bei der Beschreibung dieses Prüfverfahrens.

Fig. 6 zeigt eine Schemazeichnung des Prüfstückes für die Prüfung der Nahtschiebefestigkeit. Die Erläuterungen hierzu erfolgen bei der Beschreibung dieses Prüfverfahrens.

Fig. 7 zeigt ein Gewebe mit Zuschnitten für den Filterteil des Airbags, wie es auf einer Webmaschine unter Mitverwendung einer Schaftmaschine hergestellt werden kann. Die Erläuterungen hierzu erfolgen bei Ausführungsbeispiel 1.

Fig. 8 zeigt ein Gewebe mit Zuschnitten für den Filterteil des Airbags, wie es auf einer Jacquardmaschine hergestellt werden kann. Die Erläuterungen hierzu erfolgen bei Ausführungsbeispiel 2.

Fig. 9 zeigt ein Gewebe mit Zuschnitten für den Filterteil des Airbags, wie es durch Variation der Kett- und Schußfadenzahlen hergestellt werden kann. Die Erläuterungen hierzu erfolgen bei Ausführungsbeispiel 3.

Die Herstellung von Geweben nach dem beschriebenen erfindungsgemäßen Verfahren ist nicht auf Gewebe für den Filterteil des Airbags beschränkt. Dieses Verfahren kann für jedes beliebige Gewebe, bei dem unterschiedliche Luftdurchlässigkeiten oder unterschiedliche Nahtfestigkeiten erforderlich sind, angewandt werden. In besonderer Weise eignet sich das erfindungsgemäße Verfahren für die Herstellung technischer Gewebe, soweit eine zonenweise unterschiedliche Filterwirkung, zum Beispiel für Gase, notwendig ist. In ganz besonderer Weise ist dieses Verfahren für die Herstellung von Geweben für den Filterteil des Airbags geeignet.

Für die Ausführung des erfindungsgemäßen Verfahrens kann jedes beliebige Garn zum Einsatz kommen. Für Airbag-Gewebe haben sich zum Beispiel Polyamid 6.6 - Filamentgarne als gut geeignet erwiesen. Diese Garne können in Titern von 235 f36, 350 f 72, 470 f 72 oder 940 f 140 zum Einsatz kommen. Es können aber auch andere Titer Verwendung finden.

Die Schrumpfauslösung und die Einstellung der gewünschten Luftdurchlässigkeit erfolgt durch ein Naßbehandlungsverfahren, wie in der deutschen Patentanmeldung P 40 00 740.5 beschrieben.

Die erfindungsgemäß hergestellten Gewebe ergeben bei der Verwendung als Filterteil des Airbags nach dem Vernähen mit einem Gewebe mit Luftdurchlässigkeit < 10 l/dm²·min, das den Kontaktteil des Airbags bildet, einen Airbag, der die Möglichkeit eines sicheren Auffangens des Fahrzeuginsassen im Falle eines Zusammenstoßes ohne die Gefahr von zusätzlichen Verletzungen bietet.

Mit Airbags, die erfindungsgemäß hergestellte Gewebe im Filterteil enthalten, ist es möglich, ein sicheres und den Anforderungen der Automobilhersteller entsprechendes Airbag-System im Kraftfahrzeug zu installieren. Unter Airbag-System ist der Airbag selbst, die Unterbringung des Airbags im Kraftfahrzeug sowie das Steuerungssystem zum Auslösen der Airbagfunktion zu verstehen.

### Prüfung der Luftdurchlässigkeit:

Die Prüfung der Luftdurchlässigkeit wird in Anlehnung an DIN 53 887 vorgenommen. In Abweichung von dieser Norm wird lediglich der Prüfdifferenzdruck auf 500 Pa erhöht, um auch bei niedrigen Luftdurchlässigkeiten noch ein eindeutiges Prüfsignal erhalten zu können. Alle hier genannten Luftdurchlässigkeiten wurden mit diesem Prüfdifferenzdruck ermittelt, auch wenn dies nicht immer ausdrücklich erwähnt wird.

### Prüfung der Nahtfestigkeit:

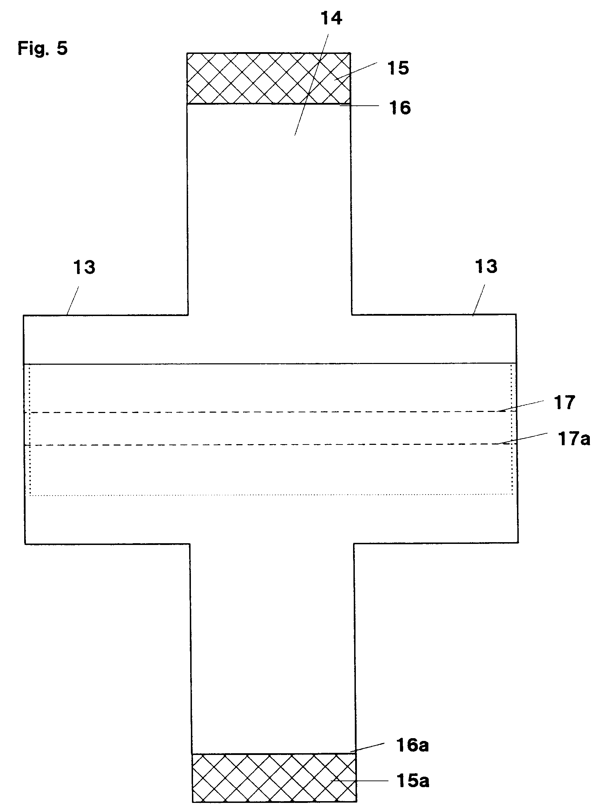

Hierfür werden aus dem Prüfgut zwei T-förmige Prüfstücke ausgeschnitten. Fig. 5 zeigt eine Skizze, in der die Anordnung dieser Prüfstücke dargestellt ist. Die Gesamtbreite von 15 cm teilt sich auf in je 5 cm Breite der Seitenstücke (13) und 5 cm des Mittelstückes (14). Die Zonen 15 und 15a bilden die Einklemmstellen bei der Prüfung, die Einspannlänge zwischen 16 und 16a beträgt 20 cm. Im breiten Mittelteil überlappen sich die beiden Prüfstücke. Im Abstand von 1 cm werden zwei Nähte (17, 17a) eingebracht. Hierfür findet eine Nadel mit 1.1 mm Durchmesser Verwendung. Die Stichzahl beträgt 3-4 pro cm. Das hierfür eingesetzte Nähgarn ist Polyester-Filamentgarn 3 x 250 dtex. Die Prüfung des so vorbereiteten Prüflings erfolgt auf einem Laborreißapparat mit einer Verformungsgeschwindigkeit von 200 mm/min.

### Prüfung der Nahtschiebefestigkeit:

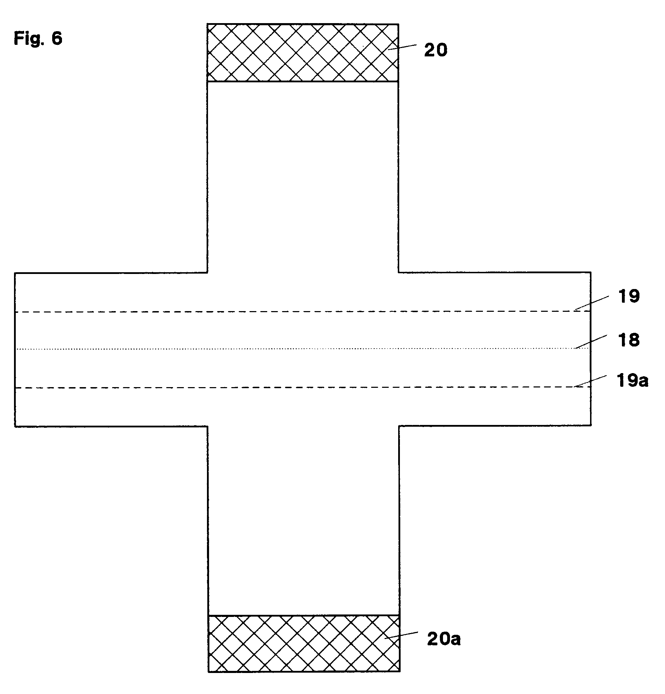

Hierfür wird aus dem Prüfgut ein Prüfstück in der Form eines Doppel-T ausgeschnitten, wie in Fig. 6 dargestellt. Der Prüfling wird längs der Linie 18 gefaltet. Entlang den Linien 19 bzw. 19a wird eine Naht in das doppelt liegende Prüfmaterial eingebracht. Die Abstände von Linie 18 zu den Linien 19 bzw. 19a betragen jeweils 1 cm, ebenso sind die Abstände von den Linien 19 bzw. 19a zum Rand des Prüfstückes 1 cm. Die Nähbedingungen entsprechen denen, die bei der Prüfung der Nahtfestigkeit beschrieben wurden. Danach wird das Prüfmaterial entlang der Linie 18 aufgeschnitten. An den Stellen 20 und 20a wird das Prüfgut in einen Laborreißapparat eingespannt. Die beiden vernähten Teilproben werden einer Verformungsgeschwindigkeit von 100 mm/min ausgesetzt, wobei das Ablesen des Auseinandergleitens der Nahtstelle nach Belastungen von 5 und 10 daN erfolgt.

In den nachfolgenden Ausführungsbeispielen werden Möglichkeiten für die Ausführung des erfindungsgemäßen Verfahrens beschrieben. Die hier angegebene Fensteranordnung sowie die Form der Zuschnitte dürfen nicht als einschränkend verstanden werden. Es sind Beispiele, die in vielfacher Weise abgewandelt und den jeweiligen Forderungen optimal angepaßt werden können.

### Ausführungsbeispiele

### Beispiel 1:

Polyamid 6.6 - Filamentgarn mit einem Titer 470 f 72 wird auf einem Greiferwebstuhl zu einem Gewebe in Leinwandbindung verarbeitet. Die Gesamtbreite des Gewebes beträgt 180 cm, die Fadenzahlen in Kette und Schuß sind je 19/cm.

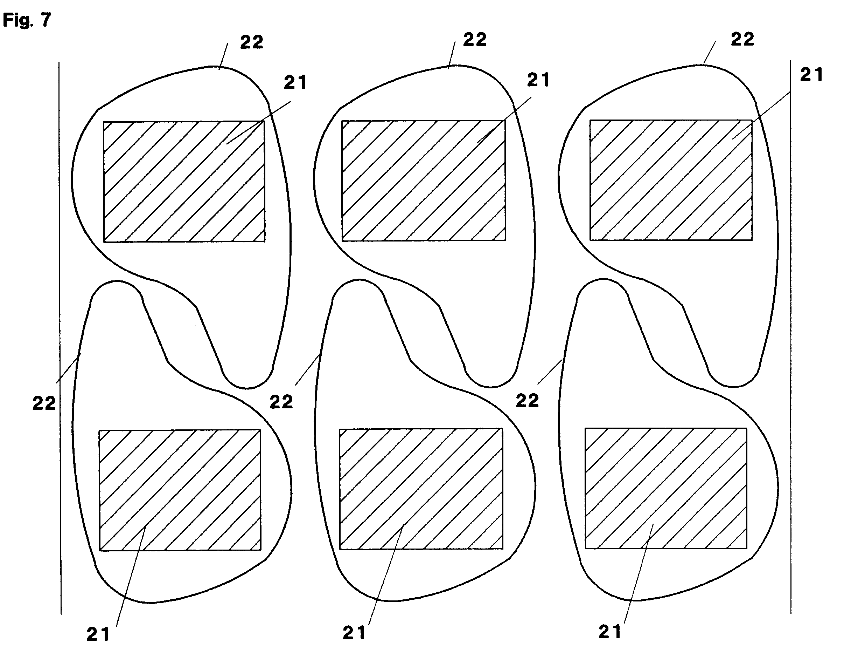

Nach 15 cm Weblänge wird partiell die Bindung in Panama 2/2 geändert. Diese Änderung erfolgt nicht über die gesamte Warenbreite, sondern lediglich für Segmente, beginnend 15 cm ab linker Webkante. Gemäß Fig. 7 werden insgesamt drei Fenster (21) über die Breite des Gewebes mit Panamabindung 2/2 in das Gewebe eingebracht. Die Maße der Fenster betragen 40 cm in der Breite und 30 cm in der Länge. Die Änderung der Gewebebindung in der Leinwandgrundbindung erfolgt mit Hilfe einer Schaftmaschine. Nach 45 cm Weblänge wird dann wieder über die gesamte Webbreite in Leinwandgrundbindung weitergearbeitet. Nach 90 cm Weblänge wird wieder in gleicher Weise auf das Weben von Fenstern umgestellt und dieser Vorgang gemäß diesen Angaben über die gesamte Länge des Gewebes fortgesetzt, wobei es zweckmäßig ist, im Interesse eines Spannungsausgleichs nun die Fenster versetzt anzuordnen.

Der Zuschnitt für das Filtergewebe des Airbags erfolgt entlang den Linien 22. So wird gewährleistet, daß an den Stellen, in denen beim späteren Vernähen zwangsläufig die Naht liegt, ein dichtes Gewebe vorliegt, bei dem nicht die Gefahr des Aufreißens der Naht beim Auslösen der Airbagfunktion besteht.

Die Luftdurchlässigkeit der mit der Leinwandgrundbindung gewebten Teile beträgt 17 l/dm²·min, an den fensterartig in Panamabindung 2/2 eingewebten Stellen (21) beträgt die Luftdurchlässigkeit 50 l/dm²·min.

### Beispiel 2:

Versuch 1 wurde wiederholt. Hierbei wurde anstelle der in Versuch 1 angewandten Greiferwebmaschine mit Schaftmaschine eine Jacquardmaschine eingesetzt.

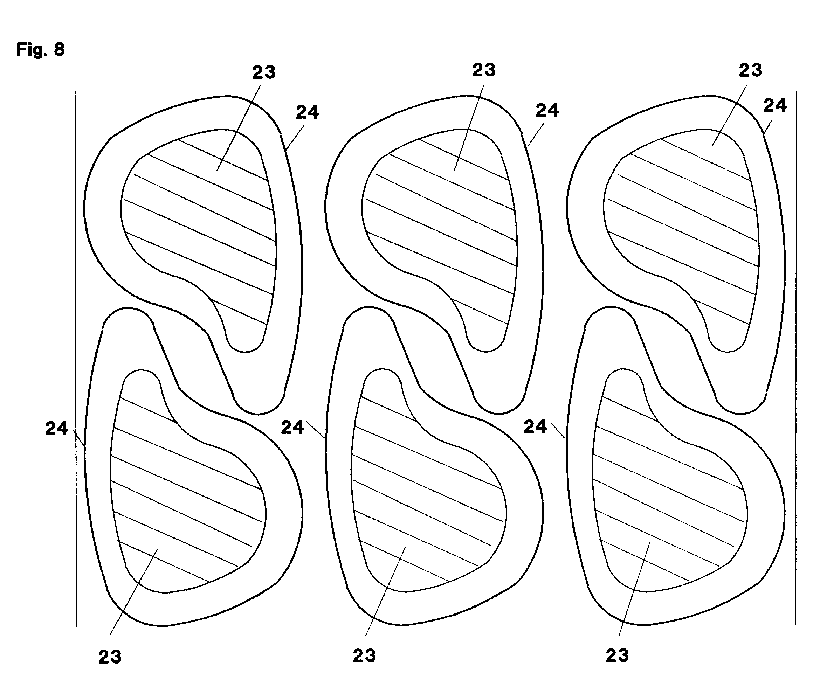

In Fig. 8 ist das Einbringen der Fenster (23) mit höhererer Luftdurchlässigkeit durch Variation der Bindung mit Hilfe einer Jacquardmaschine dargestellt. Im Vergleich zum Weben mit der Schaftmaschine können hier die Zonen mit höherer Luftdurchlässigkeit der Form der Zuschnitte (entlang der mit 24 gekennzeichneten Linien) für den Filterteil des Airbags gut angepaßt werden.

### Beispiel 3:

Polyamid 6.6 - Filamentgarn mit einem Titer 470 f 72 wird auf einem Greiferwebstuhl zu einem Gewebe in Leinwandbindung verarbeitet. Die Gesamtbreite des Gewebes beträgt 170 cm.

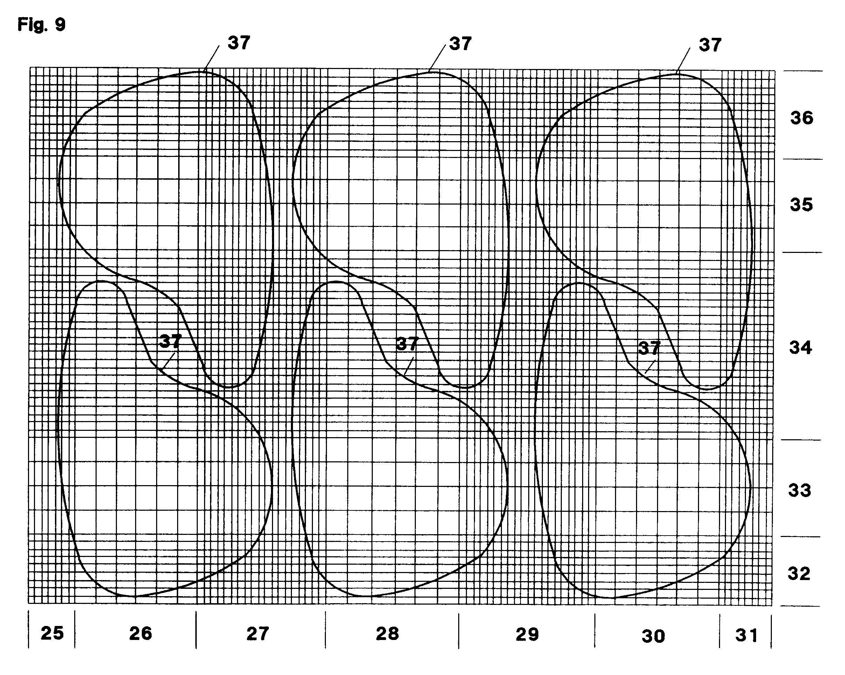

Hierzu wird eine Kette mit wechselnden Fadenzahlen pro cm vorgelegt. In Fig. 9 ist das vorgegebene Webschema dargestellt.

Beginnend am linken Rand wird zunächst ein Fadensegment in einer Breite von 10 cm mit einer Fadenzahl von 19/cm angeordnet (25). Daneben folgt ein Segment in einer Breite von 30 cm mit einer Fadenzahl von 16/cm (26). Danach wieder ein Segment mit einer Fadenzahl von 19/cm in einer Breite von 30 cm (27). In Abständen von je 30 cm folgen dann Segmente in einer Breite von je 30 cm mit Fadenzahlen von 16/cm (28), 19/cm (29) und 16/cm (30) sowie am Rand in einer Breite von 10 cm mit einer Fadenzahl von 19/cm (31).

Der Schußeintrag wird elektronisch gesteuert. Hier erfolgt die Steuerung so, daß zunächst ein Segment von 20 cm Länge mit einer Fadenzahl von 19/cm eingebracht wird (32). Danach wird der Schußeintrag auf einer Länge von 20 cm auf Fadenzahlen von 16/cm (33) geändert. Dann wird auf einer Länge von 60 cm wieder auf einen Schußeintrag von 19/cm umgestellt (34). Danach werden in Abständen von je 30 cm Fadenzahlen von 16/cm (35) und 19/cm (36) eingeschossen. In entsprechender Weise wiederholt sich nun der Wechsel von höheren und geringeren Fadenzahlen.

Dadurch entstehen, wie weiter vorn schon erläutert (siehe Beschreibung von Fig. 4) Zonen mit geringer Luftdurchlässigkeit, Zonen mit mittlerer Luftdurchlässigkeit sowie Zonen mit hoher Luftdurchlässigkeit. Die Zuschnitte für den Filterteil des Airbags, die entlang der mit 37 gekennzeichneten Linie verlaufen, werden so angeordnet, daß sich die Schnittkanten, die auch die späteren Nahtstellen bilden, bevorzugt in den Zonen geringer Luftdurchlässigkeit befinden.

Die Luftdurchlässigkeiten liegen in den Bereichen, in denen sich Kettfäden mit Fadenzahlen 19/cm mit Schußfäden mit Fadenzahlen 19/cm kreuzen, bei 17 l/dm²·min. In Stellen, in denen sich Kettfäden mit 16/cm mit Schußfäden mit 16/cm kreuzen, liegen die Luftdurchlässigkeiten bei 90 l/dm²·min. In den Bereichen mittlerer Fadendichte (16 Kettfäden/cm kreuzen sich mit 19 Schußfäden/cm bzw. 19 Kettfäden/cm kreuzen sich mit 16 Schußfäden/cm) liegen die Luftdurchlässigkeiten bei 60 l/dm²·min.

Bei dieser Arbeitsweise gelingt es nicht, die Zonen mit niedriger Luftdurchlässigkeit so an die nicht rechteckigen Zuschnitte anzupassen, daß der Zuschnittbereich jeweils vollständig in dem Bereich niedriger Luftdurchlässigkeit liegt. Die spätere Nahtkante bewegt sich also auch teilweise in Bereichen hoher und mittlerer Luftdurchlässigkeit. Das Verfahren bietet somit nicht die gleich hohe Sicherheit im Hinblick auf die Festigkeit der Nahtstellen wie die Arbeitsweisen unter Einsatz einer Schaftmaschine (siehe Ausführungsbeispiel 1) oder unter Einsatz einer Jacquardmaschine (siehe Ausführungsbeispiel 2). Diese Verfahrensweise hat aber den Vorteil, daß sie auf jeder beliebigen Webmaschine ausgeführt werden kann und somit keinerlei Beschränkungen im Hinblick auf den Maschinenpark darstellt.

## Patentansprüche

1. Verfahren zur Herstellung eines Gewebes für den Filterteil eines mehrteiligen Airbags, das anschließend oder später zugeschnitten wird, dadurch gekennzeichnet, daß durch Variation der Kett- und Schußfadenzahlen und/oder der Gewebebindungen Zonen mit unterschiedlicher Luftdurchlässigkeit und unterschiedlicher Schnitt- bzw. Nahtfestigkeit eingestellt werden, wobei die Variation der Kett- und Schußfadenzahlen und/oder der Gewebebindungen so erfolgt, daß an den späteren Schneid- bzw. Nahtstellen (22, 24, 37) eine besonders niedrige Luftdurchlässigkeit und eine hohe Schnitt- bzw. Nahtfestigkeit erreicht wird, während die Zonen im Innenbereich des zugeschnittenen Teiles (21, 23) eine höhere Luftdurchlässigkeit aufweisen.

2. Verfahren nach Anspruch 1, dadurch gekennzeichnet, daß bei einem Gewebe mit dichter Grundbindung (1) durch Variation der Gewebebindung fensterartige Zonen mit höherer Luftdurchlässigkeit und geringerer Schnitt- und Nahtfestigkeit (2, 3, 4, 5) entstehen und daß an den späteren Schneid- und Nahtstellen die dichte Grundbindung (1) erhalten bleibt.

3. Verfahren nach Anspruch 1 - 2, dadurch gekennzeichnet, daß zum Einstellen von Zonen mit höherer Luftdurchlässigkeit jede beliebige, in der Webereipraxis bekannte Gewebebindung, abweichend von der Grundbindung, Verwendung finden kann.

4. Verfahren nach Anspruch 1 - 3, dadurch gekennzeichnet, daß zum Einstellen der Zonen mit höherer Luftdurchlässigkeit mit von der Grundbindung abweichender Gewebebindung eine Schaftmaschine eingesetzt wird.

5. Verfahren nach Anspruch 1 - 3, dadurch gekennzeichnet, daß zum Einstellen der Zonen mit höherer Luftdurchlässigkeit mit von der Grundbindung abweichender Gewebebindung eine Exzentermaschine eingesetzt wird.

6. Verfahren nach Anspruch 1 - 3, dadurch gekennzeichnet, daß zum Einstellen der Zonen mit höherer Luftdurchlässigkeit mit von der Grundbindung abweichender Gewebebindung eine Jacquardmaschine eingesetzt wird.

7. Verfahren nach Anspruch 1, dadurch gekennzeichnet, daß ein Gewebe in Leinwandbindung hergestellt wird und daß zum Einstellen von Zonen mit geringer Luftdurchlässigkeit und hoher Schnitt- bzw. Nahtfestigkeit die Folge der Kett- und Schußfäden so gewählt wird, daß sich an Stellen geringer Luftdurchlässigkeit und hoher Schnitt- bzw. Nahtfestigkeit (10) viele Kett- und Schußfäden kreuzen, daß sich an Stellen hoher Luftdurchlässigkeit (11) wenige Kett- und Schußfäden kreuzen und daß darüberhinaus Zonen mit mittlerer Luftdurchlässigkeit und mittlerer Schnitt- und Nahtfestigkeit (12) entstehen.

8. Verfahren nach Anspruch 1, dadurch gekennzeichnet, daß je eine Zone mit geringerer Luftdurchlässigkeit innerhalb der für die Zuschnitte bestimmten Bereiche des Gewebes so angeordnet wird, daß ihr Umriß dem Umriß des jeweiligen Zuschnittes in gleichmäßigem oder wechselndem Abstand folgt, so daß der Rand der Zuschnitte von einer Zone mit geringerer Luftdurchlässigkeit (22, 24, 37) gebildet wird.

9. Gewebe für den Filterteil eines mehrteiligen Airbags, dadurch gekennzeichnet, daß es durch Variation der Kett- und Schußfadenzahlen und/oder der Gewebebindungen eingestellte Zonen unterschiedlicher Luftdurchlässigkeit enthält, wobei die Zonen im Gewebe so angeordnet sind, daß die Zonen mit geringerer Luftdurchlässigkeit beim Zuschnitt des Gewebes für die spätere Konfektionierung des Airbags die Nahtstellen bilden.

10. Verwendung eines Gewebes gemäß Anspruch 9 zur Herstellung des Filterteiles eines Airbags, dadurch gekennzeichnet, daß beim Zuschneiden des Filterteiles die Zuschneidestellen (22, 24, 37) in dem Gewebebereich mit niedriger Luftdurchlässigkeit (1, 10) liegen, daß der Gewebebereich mit hoher Luftdurchlässigkeit (4, 5, 11, 21, 23) den Innenbereich des Filterteils bildet und daß der Rand des Zuschnitts von einer Zone mit geringer Luftdurchlässigkeit gebildet wird.

11. Filterteil eines Airbags, hergestellt aus einem Gewebe gemäß Anspruch 9, dadurch gekennzeichnet, daß dieser aus einem Gewebe mit Zonen unterschiedlicher Luftdurchlässigkeit besteht, daß die Nahtstellen des Filterteils in dem Gewebebereich mit niedriger Luftdurchlässigkeit liegen und daß der Innenbereich des Filterteils von einer oder mehreren Zonen hoher Luftdurchlässigkeit gebildet wird.

12. Airbag mit einem Filterteil nach Anspruch 11.

13. Airbagsystem mit einem Airbag nach Anspruch 12.

## Claims

1. Method for producing a woven fabric for the filter part of a multi-part airbag, to be cut out either immediately following production or subsequently, characterized in that zones of differing air permeability characteristics and differing cutting or seam strengths are positioned within the fabric by variation of the warp and weft thread counts and/or the fabric weaves, the warp and weft thread counts and/or the fabric weaves being varied so that a particularly low air permeability and a high cutting or seam strength are obtained at the subsequent cutting or seam locations (22, 24, 37), while the zones in the inner area of the cut part (21, 23) have a higher air permeability.

2. Method according to Claim 1, characterized in that in a woven fabric with a dense basic weave (1), window-type zones with a higher air permeability and a lower cutting and seam strength (2, 3, 4, 5) are produced by variation of the fabric weave and in that the dense basic weave (1) is retained at the subsequent cutting and seam locations.

3. Method according to either of Claims 1 - 2, characterized in that zones with a higher air permeability can be positioned within the fabric by the use of any fabric weave, known in the art of weaving, which differs from the basic weave.

4. Method according to any one of Claims 1 - 3, characterized in that the zones with a higher air permeability, having a fabric weave differing from the basic weave, are positioned within the fabric by the use of a dobby loom.

5. Method according to any one of Claims 1 - 3, characterized in that the zones with a higher air permeability, having a fabric weave differing from the basic weave, are positioned within the fabric by the use of a tappet loom.

6. Method according to any one of Claims 1 - 3, characterized in that the zones with a higher air permeability, having a fabric weave differing from the basic weave, are positioned within the fabric by the use of a jacquard loom.

7. Method according to Claim 1, characterized in that a woven fabric is produced in plain weave and in that, for the purpose of positioning within the fabric zones with a low air permeability and a high cutting or seam strength, the sequence of the warp and weft threads is selected so that many warp and weft threads cross at locations with a low air permeability and a high cutting or seam strength (10), so that few warp and weft threads cross at locations with a high air permeability (11) and so that, in addition, zones with a medium air permeability and a medium cutting and seam strength (12) are produced.

8. Method according to Claim 1, characterized in that each of the areas of the woven fabric intended to constitute the cutting forms contains one zone with a lower air permeability, in that the outline of this zone follows the outline of the particular cutting form, the distance between the two outlines being constant or varying, such that the edge of the cutting forms is formed by a zone with a lower air permeability (22, 24, 37).

9. Woven fabric for the filter part of a multi-part airbag, characterized in that it contains zones of differing air permeability characteristics which are positioned within the fabric by variation of the warp and weft thread counts and/or the fabric weaves, the zones being arranged within the fabric so that when the woven fabric is cut for subsequent making-up of the airbag, the zones with a lower air permeability form the locations of the seams.

10. Use of a woven fabric according to Claim 9 for the purpose of producing the filter part of an airbag, characterized in that when the filter part is cut out, the cutting locations (22, 24, 37) lie within the area of the woven fabric with a low air permeability (1, 10), in that the area of the woven fabric with a high air permeability (4, 5, 11, 21, 23) forms the inner area of the filter part and in that the edge of the cutting form is formed by a zone with a low air permeability.

11. Filter part of an airbag, produced from a woven fabric according to Claim 9, characterized in that it is composed of a woven fabric having zones of differing air permeability characteristics, in that the seam locations of the filter part lie within the area of the woven fabric with a low air permeability and in that the inner area of the filter part is formed by one or several zones with a high air permeability.

12. Airbag with a filter part according to Claim 11.

13. Airbag system with an airbag according to Claim 12.

## Revendications

1. Procédé de fabrication d'un tissu pour la partie filtre d'un sac gonflable en plusieurs parties, découpée consécutivement ou plus tard, caractérisé par le fait que l'on réalise des zones qui présentent des perméabilités à l'air différentes ainsi que des tenues à la coupe et aux coutures différentes en faisant varier les nombres de fils de chaîne et de trame et/ou l'armure du tissu, la variation des nombres de fils de chaîne et de trame et/ou de l'armure du tissu étant opérée de manière telle que l'on obtienne aux emplacements qui formeront ensuite les zones de découpe et de couture (22, 24, 37) une perméabilité à l'air très faible et une résistance de la coupe et des coutures élevées tandis que les zones situées à l'intérieur de la partie découpée (21, 23) présentent une perméabilité à l'air plus élevée.

2. Procédé selon la revendication 1, caractérisé par le fait que, dans un tissu à armure de base (1) serrée, on obtient des zones en forme de fenêtres avec une perméabilité à l'air élevée et une résistance de la coupe et des coutures (2, 3, 4, 5) plus faible en faisant varier l'armure du tissu et par le fait que l'armure de base (1) serrée est conservée dans les zones destinées à la coupe et aux coutures.

3. Procédé selon la revendication 1 ou 2, caractérisé par le fait que pour réaliser les zones avec une perméabilité à l'air plus élevée, on peut utiliser tous les types d'armures connus dans la technique du tissage et qui différent de l'armure de base.

4. Procédé selon les revendications 1 à 3, caractérisé par le fait que l'on utilise une ratière d'armure pour réaliser des zones à perméabilité à l'air plus élevée, avec une armure qui diffère de l'armure de base du tissu.

5. Procédé selon les revendications 1 à 3, caractérisé par le fait que l'on utilise une machine à excentrique pour réaliser des zones à perméabilité à l'air plus élevée, avec une armure qui diffère de l'armure de base du tissu.

6. Procédé selon les revendications 1 à 3, caractérisé par le fait que l'on utilise un métier Jacquard pour réaliser des zones à perméabilité à l'air plus élevée, avec une armure qui diffère de l'armure de base du tissu.

7. Procédé selon la revendication 1, caractérisé par le fait que l'on fabrique un tissu à armure toile et par le fait que pour réaliser des zones qui présentent une perméabilité à l'air plus faible et une résistance de la coupe et des coutures élevée on choisit l'alternance entre fils de chaîne et fils de trame telle que, dans les zones avec une perméabilité à l'air plus faible et une résistance à la coupe et aux couture élevée (10), un grand nombre de fils de chaîne et de fils de trame se croisent, dans les zones avec une perméabilité à l'air élevée (11), un nombre réduit de fils de chaîne et de fils de trame se croisent et qu'il se forme en outre des zones avec une perméabilité à l'air moyenne et une résistance de la coupe et des couture moyenne (12).

8. Procédé selon la revendication 1, caractérisé par le fait que l'on dispose chaque fois une zone à faible perméabilité à l'air dans les parties prévues pour la découpe de manière telle que le contour de la découpe concernée suive à distance constante ou variable le contour de la découpe, afin que le bord des découpes soit constitué par une zone à faible perméabilité à l'air (22, 24, 37).

9. Tissu pour la partie filtre d'un sac gonflable en plusieurs parties, caractérisé par le fait qu'il comporte des zones qui présentent une perméabilité variable à l'air obtenue par variation des nombres des fils de chaîne et de trame et/ou des armures du tissu, les zones dans le tissu étant disposées de manière telle que, lors de la découpe du tissu en vue de la confection du sac gonflable, les zones à faible perméabilité à l'air constituent les zones de couture.

10. Utilisation d'un tissu selon la revendication 9 pour la fabrication de la partie filtre d'un sac gonflable, caractérisée par le fait que lors de la découpe de la partie filtre, les emplacements de découpe (22, 24, 37) sont situés dans la zone du tissu à faible perméabilité à l'air (1, 10), par le fait que la zone du tissu à perméabilité à l'air élevée (4, 5, 11, 21, 23) constitue la partie intérieure de la partie filtre et par le fait que le bord de la découpe est formé par une zone à faible perméabilité à l'air.

11. Partie filtre d'un sac gonflable fabriqué à partir d'un tissu selon la revendication 9, caractérisé par le fait que ladite partie filtre se compose d'un tissu avec des zones présentant des perméabilités à l'air différentes, par le fait que les emplacements de couture de la partie filtre sont situés dans les zones à faible perméabilité à l'air et par le fait que la partie intérieure de la partie filtre est constituée par une ou plusieurs zones à forte perméabilité à l'air.

12. Sac gonflable comportant une partie filtre selon la revendication 11.

13. Système de sac gonflable comportant un sac gonflable selon la revendication 12.
